# EUROPEAN PATENT SPECIFICATION

(11) **EP 3 675 372 B1**
(45) Date of publication and mention of the grant of the patent: **14.05.2025**
(21) Application number: 18848434.9
(22) Date of filing: 24.08.2018
(51) Int. Cl.: H04B 1/00, H04B 1/3827, H01Q 1/24, H01Q 5/50, H04B 1/18, H04B 1/04

(54) **MOBILE TERMINAL HAVING SHARED RADIO FREQUENCY ANTENNA**
MOBILES ENDGERÄT MIT GEMEINSAMER FUNKFREQUENZANTENNE
TERMINAL MOBILE AYANT UNE ANTENNE RADIOFRÉQUENCE PARTAGÉE

(30) Priority: 25.08.2017 CN 201710741183
(43) Date of publication of application: 01.07.2020
(73) Proprietor: JRD Communication (Shenzhen) Ltd, Shenzhen City, Guangdong 518052 (CN)
(72) Inventor: XU, Jianhua, Shenzhen Guangdong 518052 (CN); HUANG, Fan, Shenzhen Guangdong 518052 (CN)
(74) Representative: Murgitroyd & Company
(86) International application number: PCT/CN2018/102348
(87) International publication number: WO 2019/037786

(56) References cited:
- WO-A1-2012/176217
- CN-A- 103 138 794
- CN-A- 103 443 999
- CN-A- 105 940 554
- CN-A- 106 411 420
- CN-A- 106 575 970
- CN-A- 107 547 101
- US-A1- 2012 164 962
- US-A1- 2014 087 786
- US-A1- 2015 044 977

## Description

### FIELD OF THE INVENTION

The present invention relates to an antenna design for a mobile terminal having a distance sensing function, and more particularly, to a mobile terminal with a share radio frequency (RF) antenna.

### BACKGROUND OF THE INVENTION

As the progress of the communication technology, mobile terminals, such as a cell phone, have become necessary in human life. More and more cell phones are equipped with a distance sensing function.

The distance sensing function could reduce the radiation to human bodies and reduce the power consumption of the mobile terminal. When the user is getting closer to the mobile terminal, the transmission function of the antenna is reduced to reduce the radiation to a human body. Therefore, most of the mobile terminals are equipped with the distance sensing function.

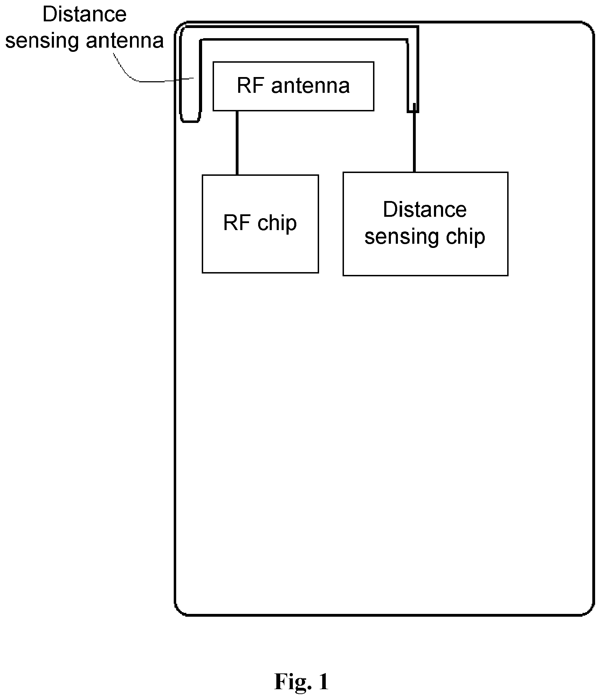

The distance sensing chip and the RF chip in a conventional mobile terminal are independently connected to their antennas. As shown in Fig. 1, the distance sensing antenna is close to the RF antenna. Because both antenna are close to each other and are made by metal, they introduce interferences to each other. Furthermore, the occupied area of the distance sensing antenna is larger and the cost of the distance sensing antenna is higher.

D1 (US 2014/087786), D2 (US 2015/044977) and D3 (US 2012/164962) disclose examples of mobile terminals where distance sensing and RF communication chips are not independently connected to their antennas.

### SUMMARY

One objective of an embodiment of the present invention is to provide a mobile terminal with a shared antenna to solve the above-mentioned issues of high interferences and high costs in an improved way. The invention is set out in the appended claims.

### BRIEF DESCRIPTION OF THE DRAWINGS

Fig. 1 is a diagram of an antenna module of a mobile terminal according to the conventional art.
Fig. 2 is a diagram of a structure of a mobile terminal with a shared RF antenna according to an embodiment of the present invention.
Fig. 3 is a circuit diagram of the mobile terminal according to an embodiment of the present invention.

### DETAILED DESCRIPTION OF PREFERRED EMBODIMENTS

The invention is described below in detail with reference to the accompanying drawings, wherein like reference numerals are used to identify like elements illustrated in one or more of the figures thereof, and in which exemplary embodiments of the invention are shown. This invention may, however, be embodied in many different forms and should not be construed as limited to the particular embodiments set forth herein. Rather, these embodiments are provided so that this disclosure will be thorough and complete, and will fully convey the scope of the invention to those skilled in the art.

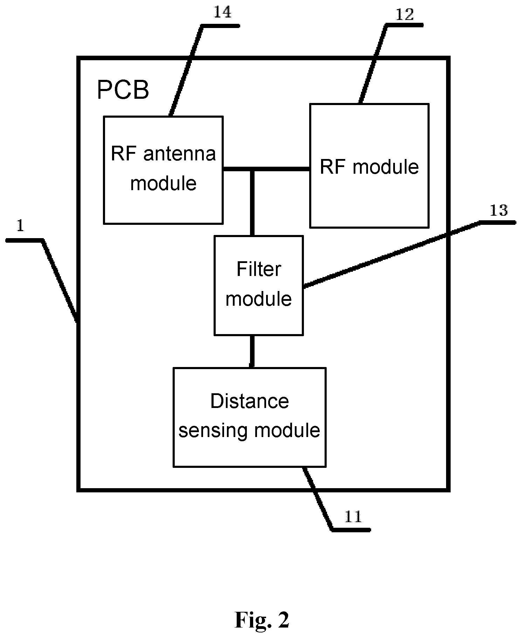

Please refer to Fig. 2. Fig. 2 is a diagram of a structure of a mobile terminal with a shared RF antenna according to an embodiment of the present invention. As shown in Fig. 2, the mobile terminal comprises a printed circuit board (PCB) 1. The PCB comprises a distance sensing module 11, an RF module 12, a filter module 13, and an RF antenna module 14. The distance sensing module 11 is electrically connected to the RF antenna module 14 through the filter module 13. The RF antenna module 14 is electrically connected to the RF module 12.

The RF antenna module 14 could generate a low-frequency resonant frequency (determined by the working frequency of the distance sensing module) and a high-frequency resonant frequency (corresponding to the working frequency of the RF module 12) such that the RF antenna module 14 could satisfy the demands of a low-frequency working signal required by the distance sensing module 11 and a high-frequency working signal required by the high-frequency RF module 12. The filter module 13 is used to block the unwanted portion of the input signal of the distance sensing module 11. While the mobile terminal is working in a communication mode, the RF antenna module 14 generates a working signal. The working signal is transmitted to the RF module 12 and the filter module 13. The RF module 12 receives the working signal and works accordingly. The filter module 13 receives the working signal and filters out the high-frequency portion of the working signal. For example, the filter module 13 could filter out the portion having frequency larger than 600MHz and only allow the signal having the frequency lower than 500 MHz to pass through. The filtered working signal is then transmitted to the distance sensing module 11 as its input signal such that the distance sensing module 11 works accordingly. In this way, it could prevent the distance sensing module 11 from being incorrectly triggered. It could also ensure that the distance sensing module 11 could correctly be triggered when the distance sensing operation is required. The distance sensing module 11 is used to perform the distance sensing operation. The RF module 12 is used to perform a RF transceiving operation.

Furthermore, the mobile terminal could be a LTE, 3G or 2G wireless communication smart terminals having the distance sensing function, such as a tablet, a cell phone, a data card, etc. These belong to the scope of the present invention.

In this embodiment, the RF antenna module 14 and the filter module 13 capable of generating high-frequency and low-frequency resonant frequencies are adopted. This reduces the interferences between the distance sensing module 11 and the RF module 12 when they share the same antenna. Because only one shared antenna is used, the number of antennas is reduced and thus the cost is reduced. Furthermore, the above-mentioned issue of interferences is also solved.

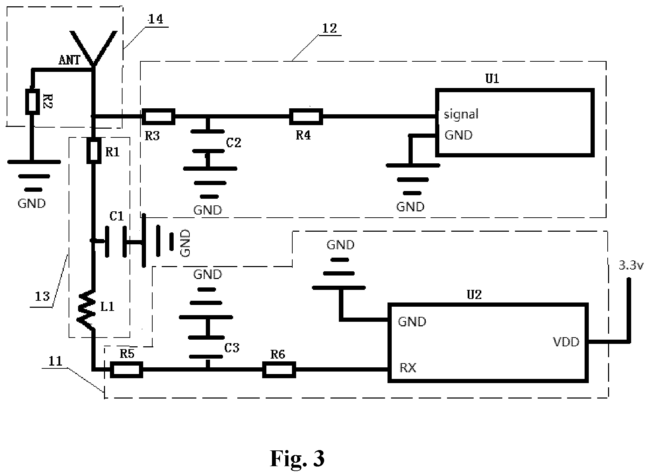

Please refer to Fig. 2 in conjunction with Fig. 3. In order to allow only the necessary working signal for the distance sensing module 11 (filter out the unwanted portion), the filter module comprises the first resistor R1, the first capacitor C1 and the first inductor L1. One end of the first resistor R1 is electrically connected to the RF antenna module 14 and the other end of the first resistor R1 is electrically connected to the ground through the first capacitor C1 and is also electrically connected to the distance sensing module 11 through the first inductor L1.

Specifically, the first resistor R1 connects the distance sensing module 11 to the RF antenna module 14 to realize the share of antenna. The first inductor L1 is used to block high-frequency portions and allow the low-frequency portion (such as signals having a frequency lower than 500 MHz) to pass through. The first capacitor C1 is a filter capacitor for filtering out signals having a frequency higher than 600 MHz. When the mobile terminal is working in the communication mode and the communication signals are inputted from the RF antenna module 14 into the distance sensing module 11, the communication signals are released to the ground through the first resistor R1 and the first capacitor and the high-frequency portion (higher than 600MHz) of the communication signals are blocked by the first inductor L1 to prevent the distance sensing module from being incorrectly triggered. When the distance sensing module 11 needs to work, a low frequency signal is inputted the distance sensing module 11 through the first resistor R1 and the first inductor L1 to trigger the distance sensing module 11.

Through installing the filter module 13, when the mobile terminal is working in the communication mode, the communication signal is released to the ground and the signal having the frequency higher than 600 MHz is blocked. This prevents the distance sensing module from being incorrectly triggered. When the distance sensing module 11 needs to work, the filter module 13 could allow the low-frequency signal to pass through the filter module to trigger the distance sensing module 11 to work. In this way, there is no need to add another distance sensing antenna. Therefore, the cost is reduced and the interference between two antennas is avoided.

In a preferred embodiment, the inductance of the first inductor L1 is 39nh-100nh. This inductance is not too low to affect the RF signal and is not too high to affect the distance sensing function. Thus, this inductance range could ensure the function of the filter module 1.

Please refer to Fig. 2 and Fig. 3 again. The RF antenna module 14 comprises an RF antenna ANT and the second resistor R2. The end of the RF antenna ANT is electrically connected to the ground through the second resistor R2 and is electrically connected to one end of the first resistor R1. The second resistor R2 is used for protection. The RF antenna module 14 could generate the resonant frequency for the distance sensing module 11 to work and could also generate the resonant frequency for the RF module 12 to work. In other words, the RF antenna module 14 could satisfy the requirement of the distance sensing signal of the distance sensing module 11 and the requirement of the RF signal of the RF module 12. The end of the RF antenna ANT has an antenna feeding point, which is electrically connected to the RF module 14 and the filter module 13 to ensure the communication signal to pass.

Please refer to Fig. 2 and Fig. 3 again. The RF module 12 comprises the RF chip U1, the third resistor R3, the fourth resistor R4 and the second capacitor C2. One end of the third resistor R3 is electrically connected to the end of the RF antenna ANT. The other end of the third resistor R3 is electrically connected to the ground through the second capacitor C2 and is also electrically connected to the signal pin of the RF chip U1 through the fourth resistor R4. The GND pin of the RF chip U1 is electrically connected to the ground. The third resistor R3 and the second capacitor C2 form the RC oscillator circuit for the filter function. The fourth resistor R4 is a protection resistor. The RF chip could be the RF chip of the model type RF1662. This model type has advantages of stable performance and great function. In another embodiment, the present invention could adopt another model type of the RF chip. This change also falls within the scope of the present invention.

When the mobile terminal is working in the communication mode, the RF antenna module 14 generates the communication signal. The RC oscillator circuit performs the filter operation on the communication signal and then transfers the filtered signal to the RF chip U1 to drive the RF chip U1 to work such that various RF functions are realized.

Please refer to Fig. 2 and Fig. 3 again. The distance sensing module 11 comprises the distance sensing chip U2, the fifth resistor R5, the sixth resistor R6, and the third capacitor C3. One end of the fifth resistor R5 is electrically connected to the other end of the first resistor R1 through the first inductor L1. The other end of the fifth resistor R5 is electrically connected to the ground through the third capacitor C3 and is electrically connected to an RX pin of the distance sensing chip U2 through the sixth resistor R6. The GND pin of the distance sensing chip U2 is electrically connected to the ground and the VDD pin of the distance sensing chip U2 is electrically connected to a 3.3V voltage source. The fifth resistor R5 and the third capacitor C3 form an RC oscillator circuit to perform the filter function. The sixth resistor R6 is the protection resistor. The distance sensing chip U2 could be the distance sensing chip of the model type LDJ18829M24AC002. This model type has advantages of stable performance and great function. In another embodiment, the present invention could adopt another model type of the distance sensing chip. This change also falls within the scope of the present invention.

When the mobile terminal is working in the communication mode, the communication signal is released to the ground through the filter module 13 and the signals having the frequency higher than 600 MHz to prevent the distance sensing function from being incorrectly triggered. When the distance sensing module needs to work, the filter module 13 could allow the low-frequency signal to pass through the filter module 13. The RC oscillator circuit performs the filter operation on the communication signal and transfers the filtered signal to the distance sensing chip U2 to drive the distance sensing chip U2 to work such that the distance sensing function is triggered.

In a further embodiment, the first resistor R1 is installed near the antenna feeding point. The first inductor L1 is installed near the distance sensing chip U2. This could ensure the filter module 13 to correctly work and prevent the interference between the devices. In this way, the distance sensing function and the RF function could be satisfied by sharing only one antenna. In addition, the layout wire is shorter on the PCB such that the influence on the RF and low frequency band is avoided.

In order to well understand the present application, a further illustration will be disclosed in the following disclosure along with Fig. 2 and Fig. 3:

The RF antenna module 14 generates the working signal when the mobile terminal is working in the communication mode. The working signal is respectively transmitted to the RF module 12 and the filter module 13. The RF module 12 receives the working signal and works accordingly. The filter module 13 receives the working signal and filters out a high frequency portion from the working signal (e.g. filter out the signal portion having the frequency higher than 600 MHz and allow the signal portion having the frequency lower than 500 MHz to pass). This prevents the distance sensing module from being incorrectly triggered. When the distance sensing module needs to work, the low frequency signal that passes through the filter module 13 could drive the distance sensing chip U2 to work such that the distance sensing function is triggered.

**From** the above, the mobile terminal with a shared radio frequency (RF) antenna, the mobile terminal includes a printed circuit board (PCB). A distance sensing module, a radio frequency (RF) module, and a filter module are disposed on the PCB. The distance sensing module is configured to perform a distance sensing operation. The RF module is configured to perform an RF transceiving operation. The mobile terminal of an embodiment adopts the RF antenna module and the filter module respectively capable of generating high-frequency and low-frequency resonant frequencies. Therefore, when the distance sensing module and the RF module shares the same antenna, they do not influence each other. This reduces the number of antenna and solves the issues of the above-mentioned issues of high interferences due to the short distance between two antennas and the metallic material of the two antennas. Furthermore, it also reduces the cost.

## Claims

1. A mobile terminal with a shared radio frequency, RF, antenna, comprising:
a printed circuit board, PCB, (1), comprising:
a distance sensing module (11), configured to perform a distance sensing operation;
a radio frequency, RF, module (12), configured to perform an RF transceiving operation;
a filter module (13), configured to filter out a unwanted portion of an input signal of the distance sensing module (11); and
wherein the mobile terminal comprises an radio frequency, RF, antenna module (14), electrically connected to the distance sensing module (11) through the filter module (13) and directly connected to the RF module (12), the RF antenna module (14) being configured to generate a resonant frequency for the distance sensing module (11) and a resonant frequency for the RF module (12);
wherein the filter module (13) comprises:
a first resistor (R1);
a first capacitor (C1); and
a first inductor (L1);
wherein one end of the first resistor (R1) is electrically connected to the RF antenna module (14), and another end of the first resistor (R1) is electrically connected to a ground through the first capacitor (C1) and is electrically connected to the distance sensing module (11) through the first inductor (L1);
wherein the RF antenna module (14) comprises:
an RF antenna (ANT); and
a second resistor (R2);
wherein an end of the RF antenna (ANT) is electrically connected to the ground through the second resistor (R2) and is electrically connected to the end of the first resistor (R1);
wherein the distance sensing module (11) comprises:
a distance sensing chip (U2);
a fifth resistor (R5);
a sixth resistor (R6); and
a third capacitor (C3);
wherein one end of the fifth resistor (R5) is electrically connected to the another end of the first resistor (R1) through the first inductor (L1), another end of the fifth resistor (R5) is electrically connected to the ground through the third capacitor (C3) and is electrically connected to an RX pin of the distance sensing chip (U2) through the sixth resistor (R6), a GND pin of the distance sensing chip (U2) is electrically connected to the ground, and a VDD pin of the distance sensing chip (U2) is electrically connected to a 3.3V voltage source.

2. The mobile terminal of claim 1, **characterized in that** the first inductor (L1) has an inductance between 39-100 nh.

3. The mobile terminal of claim 1, **characterized in that** the RF module (12) comprises:
an RF chip (U1);
a third resistor (R3);
a fourth resistor (R4); and
a second capacitor (C2);
wherein an end of the third resistor (R3) is electrically connected to the end of the RF antenna (ANT), another end of the third resistor (R3) is electrically connected to the ground through the second capacitor (C2) and is electrically connected to a signal pin of the RF chip (U1) through the fourth resistor (R4), and the GND pin of the RF chip (U1) is electrically connected to the ground.

4. The mobile terminal of claim 1, **characterized in that** the first resistor (R1) is installed near the antenna feeding point and the first inductor (L1) is installed near the distance sensing chip (U2).

## Patentansprüche

1. Ein mobiles Endgerät mit einer gemeinsam genutzten Hochfrequenz-, HF-Antenne, umfassend:
eine Leiterplatte, PCB (1), umfassend:
ein Abstandsmessmodul (11), das dazu eingerichtet ist, eine Abstandsmessung durchzuführen;
ein Hochfrequenz-, HF-Modul (12), das dazu eingerichtet ist, einen HF-Sende- und -Empfangsvorgang durchzuführen;
ein Filtermodul (13), das dazu eingerichtet ist, einen unerwünschten Anteil eines Eingangssignals des Abstandsmessmoduls (11) herauszufiltern; und
wobei das mobile Endgerät ein Hochfrequenz-, HF-Antennenmodul (14) umfasst, das mit dem Abstandsmessmodul (11) über das Filtermodul (13) elektrisch verbunden ist und direkt mit dem HF-Modul (12) verbunden ist, das HF-Antennenmodul (14) dazu eingerichtet ist, eine Resonanzfrequenz für das Abstandsmessmodul (11) und eine Resonanzfrequenz für das HF-Modul (12) zu erzeugen;
wobei das Filtermodul (13)
einen ersten Widerstand (R1);
einen ersten Kondensator (C1); und
eine erste Induktivität (L1) umfasst;
wobei ein Ende des ersten Widerstands (R1) elektrisch mit dem HF-Antennenmodul (14) verbunden ist, und das andere Ende des ersten Widerstands (R1)über den ersten Kondensator (C1) elektrisch mit Masse verbunden ist und über die erste Induktivität (L1) elektrisch mit dem Abstandsmessmodul (11) verbunden ist;
wobei das HF-Antennenmodul (14)
eine HF-Antenne (ANT); und
einen zweiten Widerstand (R2) umfasst;
wobei ein Ende der HF-Antenne (ANT) über den zweiten Widerstand (R2) mit Masse verbunden ist und mit dem Ende des ersten Widerstands (R1) elektrisch verbunden ist;
wobei das Abstandsmessmodul (11)
einen Abstandsmesschip (U2);
einen fünften Widerstand (R5);
einen sechsten Widerstand (R6); und
einen dritten Kondensator (C3) umfasst;
wobei ein Ende des fünften Widerstands (R5) über die erste Induktivität (L1) mit dem anderen Ende des ersten Widerstands (R1) elektrisch verbunden ist, das andere Ende des fünften Widerstands (R5) über den dritten Kondensator (C3) mit Masse verbunden ist und über den sechsten Widerstand (R6) mit einem RX-Pin des Abstandsmesschips (U2) elektrisch verbunden ist, ein GND-Pin des Abstandsmesschips (U2) mit Masse verbunden ist und ein VDD-Pin des Abstandsmesschips (U2) mit einer 3,3V-Spannungsquelle verbunden ist.

2. Das mobiles Endgerät nach Anspruch 1, **dadurch gekennzeichnet, dass** die erste Induktivität (L1) eine Induktivität zwischen 39-100 nH aufweist.

3. Das mobiles Endgerät nach Anspruch 1, **dadurch gekennzeichnet, dass** das HF-Modul (12) umfasst:
einen HF-Chip (U1);
einen dritten Widerstand (R3);
einen vierten Widerstand (R4); und
einen zweiten Kondensator (C2);
wobei ein Ende des dritten Widerstands (R3) mit dem Ende der HF-Antenne (ANT) elektrisch verbunden ist, das andere Ende des dritten Widerstands (R3) über den zweiten Kondensator (C2) mit Masse verbunden ist und über den vierten Widerstand (R4) mit einem Signalausgangspin des HF-Chips (U1) elektrisch verbunden ist, und der GND-Pin des HF-Chips (U1) mit Masse verbunden ist.

4. Das mobiles Endgerät nach Anspruch 1, **dadurch gekennzeichnet, dass** der erste Widerstand (R1) in der Nähe des Antennen-Einspeisepunkts installiert ist und die erste Induktivität (L1) in der Nähe des Abstandsmesschips (U2) installiert ist.

## Revendications

1. Un terminal mobile avec une antenne radiofréquence, RF, partagée, comprenant :
une carte de circuit imprimé (PCB, *printed circuit board*) (1), comprenant :
un module de détection de distance (11), configuré pour effectuer une opération de détection de distance ;
un module radiofréquence, RF, (12) configuré pour effectuer une opération d'émission-réception RF ;
un module de filtrage (13), configuré pour éliminer par filtrage une portion non souhaitée d'un signal d'entrée du module de détection de distance (11) ; et
le terminal mobile comprenant un module d'antenne radiofréquence, RF, (14) électriquement connecté au module de détection de distance (11) par l'intermédiaire du module de filtrage (13) et directement connecté au module RF (12), le module d'antenne RF (14) étant configuré pour générer une fréquence de résonance pour le module de détection de distance (11) et une fréquence de résonance pour le module RF (12) ;
dans lequel le module de filtrage (13) comprend :
une première résistance (R1) ;
un premier condensateur (C1) ; et
une première bobine d'inductance (L1) ;
dans lequel une extrémité de la première résistance (R1) est électriquement connectée au module d'antenne RF (14), et une autre extrémité de la première résistance (R1) est électriquement connectée à une masse par l'intermédiaire du premier condensateur (C1) et est électriquement connectée au module de détection de distance (11) par l'intermédiaire de la première bobine d'inductance (L1) ;
dans lequel le module d'antenne RF (14) comprend :
une antenne RF (ANT) ; et
une deuxième résistance (R2) ;
dans lequel une extrémité de l'antenne RF (ANT) est électriquement connectée à la masse par l'intermédiaire de la deuxième résistance (R2) et est électriquement connectée à l'extrémité de la première résistance (R1) ;
dans lequel le module de détection de distance (11) comprend :
une puce de détection de distance (U2) ;
une cinquième résistance (R5) ;
une sixième résistance (R6) ; et
un troisième condensateur (C3) ;
dans lequel une extrémité de la cinquième résistance (R5) est électriquement connectée à cette autre extrémité de la première résistance (R1) par l'intermédiaire de la première bobine d'inductance (L1), une autre extrémité de la cinquième résistance (R5) est électriquement connectée à la masse par l'intermédiaire du troisième condensateur (C3) et est électriquement connectée à une broche RX de la puce de détection de distance (U2) par l'intermédiaire de la sixième résistance (R6), une broche GND de la puce de détection de distance (U2) est électriquement connectée à la masse, et une broche VDD de la puce de détection de distance (U2) est électriquement connectée à une source de tension de 3,3 V.

2. Le terminal mobile de la revendication 1, **caractérisé en ce que** la première bobine d'inductance (L1) présente une inductance comprise entre 39 et 100 nH.

3. Le terminal mobile de la revendication 1, **caractérisé en ce que** le module RF (12) comprend :
une puce RF (U1) ;
une troisième résistance (R3) ;
une quatrième résistance (R4) ; et
un deuxième condensateur (C2) ;
dans lequel une extrémité de la troisième résistance (R3) est électriquement connectée à l'extrémité de l'antenne RF (ANT), une autre extrémité de la troisième résistance (R3) est électriquement connectée à la masse par l'intermédiaire du deuxième condensateur (C2) et est électriquement connectée à une broche de signal de la puce RF (U1) par l'intermédiaire de la quatrième résistance (R4), et la broche GND de la puce RF (U1) est électriquement connectée à la masse.

4. Le terminal mobile de la revendication 1, **caractérisé en ce que** la première résistance (R1) est installée près du point d'alimentation d'antenne et la première bobine d'inductance (L1) est installée près de la puce de détection de distance (U2).
